(19) Europäisches Patentamt
European Patent Office
Office européen des brevets

(11) **EP 1 109 103 B1**

(12) **FASCICULE DE BREVET EUROPEEN**

(45) Date de publication et mention
de la délivrance du brevet:
**23.05.2007 Bulletin 2007/21**

(51) Int Cl.:
***G06F 12/14*** *(2006.01)*

(21) Numéro de dépôt: **00470020.9**

(22) Date de dépôt: **06.12.2000**

(54) **Procédé de transfert sécurisé de données**

Verfahren für gesicherte Datenübertragung

Process for secured data transfer

(84) Etats contractants désignés:
**DE FR GB IT**

(30) Priorité: **15.12.1999 FR 9915795**

(43) Date de publication de la demande:
**20.06.2001 Bulletin 2001/25**

(73) Titulaire: **STMicroelectronics S.A.**
**92120 Montrouge (FR)**

(72) Inventeur: **Teglia, Yannick,**
**Cabinet Ballot**
**57070 Metz (FR)**

(74) Mandataire: **Bentz, Jean-Paul et al**
**Cabinet Ballot**
**9, rue Claude Chappe**
**Metz Technopôle**
**57070 Metz (FR)**

(56) Documents cités:
**GB-A- 2 319 705** **US-A- 5 095 525**
**US-A- 5 675 645**

**Description**

L'invention a pour objet un procédé de transfert sécurisé de données dans un circuit programmable. En particulier, l'invention vise à protéger d'une éventuelle inspection les données contenues dans une mémoire lors de leur transfert vers une autre mémoire. L'invention s'applique notamment à tout circuit programmable utilisant des données secrètes.

Les données secrètes sont par exemple des données personnelles identifiant le propriétaire du circuit programmable, des instructions de programme ou bien des clés d'algorithmes de cryptage de données. Les données secrètes sont le plus souvent stockées dans des mémoires mortes du circuit programmable à la fabrication de celui-ci. Des moyens connus sont utilisés pour protéger le contenu des mémoires mortes d'une inspection visuelle. A titre d'exemple, les données peuvent être éparpillées dans la mémoire. Cependant, lorsqu'elles sont utilisées, les données secrètes transitent en clair sur un bus de données qu'il est facile d'espionner.

Une technique d'espionnage classique consiste à mesurer le courant qui circule dans le bus ; il est en effet représentatif de la donnée qui circule dans le bus. Il suffit alors de réaliser K mesures de courant lors de K transits de la même donnée et de moyenner ces K mesures pour éliminer le bruit de la mesure et obtenir la valeur exacte de la donnée. A titre indicatif, il est nécessaire de réaliser environ K = 1000 mesures pour éliminer le bruit et obtenir la valeur exacte de la donnée qui transite sur le bus. Cette technique d'espionnage est connue sous l'expression anglo-saxone "Simple Power Analysis".

De plus, afin de réduire les coûts de fabrication des produits, les données secrètes sont souvent en partie les mêmes pour une famille donnée de circuits programmables. Aussi, si un espion arrive à lire les données secrètes mémorisées dans un produit, il pourra les utiliser pour toute une famille de produits.

Un but de l'invention est d'améliorer la sécurité des données dans un circuit programmable, et en particulier lors de leur transit sur le bus de données. Pour atteindre ce but, l'invention concerne un procédé de transfert sécurisé de données dans un circuit programmable comprenant une unité de commande, une mémoire morte comprenant des données à transférer, une mémoire inscriptible et un bus de données connecté entre la mémoire morte et la mémoire inscriptible, le bus de données étant commandé par l'unité de commande,

le procédé de transfert étant caractérisé en ce qu'une donnée secrète à transférer de N octets transite octet par octet sur le bus de données, chaque octet transitant une seule fois sur le bus de données, et en ce que les octets sont transférés selon une loi de transfert ayant au moins un paramètre choisi de manière aléatoire par l'unité de commande avant chaque transfert de la donnée secrète.

Le procédé de l'invention consiste donc à transférer les données secrètes sur le bus dans un ordre choisi aléatoirement par l'unité de commande gérant le bus de données, avant chaque transfert de la donnée secrète. Ainsi, avec l'invention, pour chaque transfert d'une même donnée, les mots de la donnée sont transmis dans un ordre différent. Les méthodes d'espionnage couramment utilisées ne suffisent donc plus pour obtenir la valeur exacte d'une donnée secrète transitant sur le bus de données.

Selon un mode préféré de réalisation, le procédé de l'invention utilise une loi de transfert qui est une permutation des éléments de l'ensemble des N octets de la donnée secrète à transférer. De préférence, la permutation est définie par la relation

$$X = (X0 + SENS * PAS * j) \ modulo \ N,$$

où un premier paramètre PAS, compris entre 0 et N-1, définit le pas de la permutation, où un second paramètre SENS, prenant deux valeurs 1 ou -1, définit le sens de parcours de l'ensemble des N octets de la donnée secrète, où un troisième paramètre X0, compris entre 0 et N-1, définit le point de départ de la permutation, et où un indice courant X, obtenu à partir des premier à troisième paramètres et d'un indice de boucle j variant entre 0 et N-1, indique le poids d'un octet de la donnée secrète à transférer.

Il est à noter qu'ici, et dans tout ce qui suit, l'expression "poids d'un octet" fait référence au rang ou au numéro d'un octet de la donnée secrète. En d'autres termes, une donnée secrète comprend N octets et chaque octet est repéré par un poids compris entre 0 et N-1, l'octet de poids 0 correspondant aux huit bits de poids les plus faibles et l'octet de poids N-1 correspondant aux huit bits de poids les plus forts de la donnée secrète.

De préférence le premier et/ou le second et/ou le troisième paramètres sont choisis aléatoirement par l'unité de commande, avant chaque transfert de la donnée secrète. De préférence encore, le premier paramètre de la permutation et le nombre N sont premiers entre eux. Par exemple, le nombre N est un nombre entier premier et le premier paramètre de la permutation est un nombre entier compris entre 1 et N-1.

Selon le mode de réalisation préféré, le procédé de l'invention comprend les étapes suivantes :

E0: Initialisation du procédé et choix des premier à troisième paramètres, l'un au moins des premier à troisième paramètres étant choisi aléatoirement par l'unité de commande, les premier à troisième paramètres étant mémorisés dans un premier registre de l'unité de commande,

E1 : Initialisation de l'indice de boucle et de l'indice courant,

E2 : Répétition N fois des étapes suivantes :

ET1 : lecture, dans la mémoire morte d'un octet de la donnée à transférer, le poids de l'octet lu étant égal à l'indice courant, et mémorisation de l'octet lu dans un second registre de l'unité de commande,

ET2 : écriture dans la mémoire vive, de l'octet contenu dans le second registre,

ET3 : incrémentation de l'indice de boucle et variation de l'indice courant.

Enfin, l'invention a également pour objet un circuit programmable comprenant une unité de commande, une mémoire morte comprenant des données à transférer, une mémoire inscriptible et un bus de données connecté entre la mémoire morte et la mémoire inscriptible, le bus de données étant commandé par l'unité de commande, le circuit programmable étant caractérisé en ce qu'il comporte en outre un générateur de nombres aléatoires pour fournir au moins un paramètre d'une loi de transfert de données utilisée pour transférer une donnée secrète de N octets de la mémoire morte vers la mémoire vive, les octets de la donnée secrète à transférer transitant octet par octet sur le bus de données, chaque octet transitant une seule fois sur le bus de données, l'au moins un paramètre étant différent à chaque transfert de la donnée secrète.

L'invention sera mieux comprise et d'autres caractéristiques et avantages apparaîtront à la lecture de la description qui va suivre, la description faisant référence au dessin annexé dans lequel :

- la figure 1 est un schéma-bloc d'un circuit programmable mettant en oeuvre l'invention,
- la figure 2 est un diagramme d'un algorithme de mise en oeuvre d'un transfert sécurisé de données, selon l'invention.

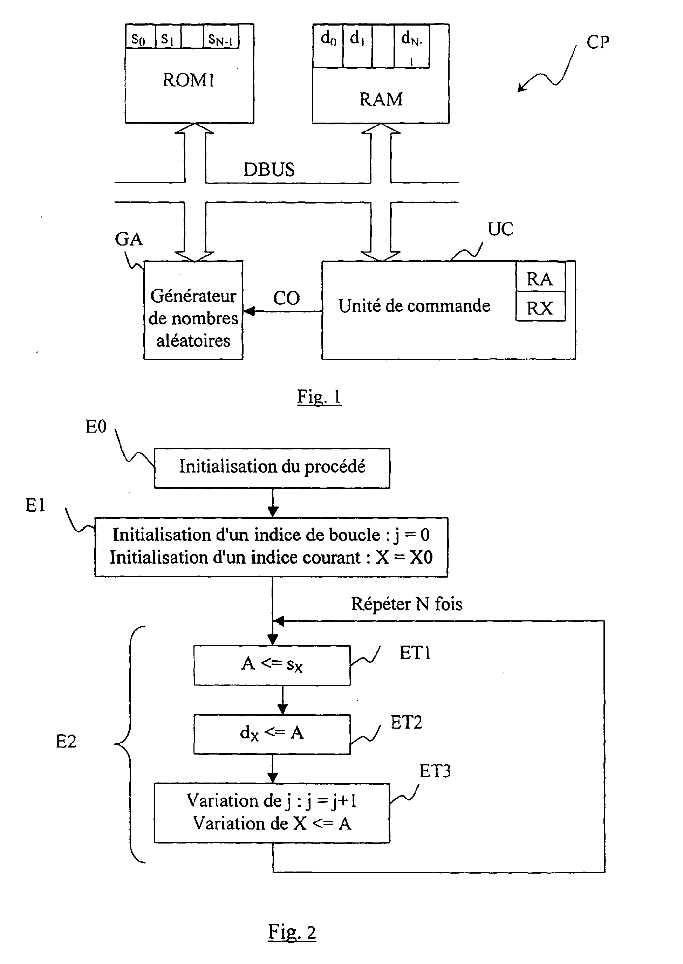

Le circuit programmable CP de la figure 1 comprend une mémoire morte ROM qui contient une donnée secrète de N octets mémorisés à des adresses $S_0$ à $S_{N-1}$, une mémoire vive RAM, une unité de commande UC, un générateur de nombres aléatoires GA et un bus de données DBUS qui relie tous les éléments les uns aux autres.

La mémoire vive RAM est une mémoire inscriptible ou ré-inscriptible, par exemple de type EPROM ou EEPROM. Le générateur de nombres aléatoires GA est un circuit connu qui peut fournir, en réponse à une instruction CO de l'unité de commande UC, des nombres entiers aléatoires compris entre 0 et un nombre entier MAX, par exemple égal à 255. L'unité de commande UC reçoit des instructions contenues dans la mémoire morte ROM et contrôle, entre autre, la mémoire vive RAM et le générateur de nombres aléatoires GA. L'unité de commande UC comprend notamment deux registres RA et RX de un octet chacun.

Bien sûr, le circuit programmable CP comprend également d'autres éléments tels que par exemple des registres de données ou d'instructions, des circuits de calcul arithmétique et logique, des compteurs, des circuits d'horloge ou bien des ports d'entrées et/ou de sortie. Le circuit programmable peut également comprendre plusieurs mémoires vives, plusieurs mémoires mortes et/ou plusieurs générateurs de nombres aléatoires. De plus, tous les éléments du circuit programmable CP peuvent éventuellement communiquer avec un ou plusieurs autres éléments, par l'intermédiaire de bus de commande, de bus de données et/ou de bus d'adresses. Cependant, par souci de simplification, seuls les éléments du circuit programmable CP strictement nécessaires à la compréhension de l'invention ont été représentés sur la figure 1.

Dans un exemple, une donnée secrète de N octets $Oct_0$ à $Oct_{N-1}$ est mémorisée aux adresses $S_0$ à $s_{N-1}$ de la mémoire morte ROM du circuit programmable CP et doit être transférée de la mémoire morte ROM vers la mémoire vive RAM à des adresses $d_0$ à $d_{N-1}$ pour être utilisée ultérieurement. Dans l'exemple, N est choisi égal à 4.

Le procédé de l'invention consiste à transférer la donnée secrète octet par octet, l'ensemble des N octets étant transféré dans un ordre différent à chaque transfert de la donnée secrète, chaque octet de la donnée secrète étant transféré une et une seule fois lors d'un même transfert de la donnée. Pour cela, le procédé de l'invention utilise une loi de transfert ayant un ou plusieurs paramètres choisis aléatoirement par l'unité de commande avant chaque transit de la donnée secrète sur le bus de données.

La loi de transfert du procédé définit l'ordre dans lequel les données sont transférées de la mémoire morte ROM vers la mémoire vive RAM, c'est-à-dire l'ordre dans lequel les octets de la données secrète transitent sur le bus de données.

Selon un mode de réalisation, le procédé de l'invention utilise une permutation comme loi de transfert, un ou des paramètres de la permutation étant choisi(s) aléatoirement. Le procédé de l'invention comprend les étapes suivantes, conformément à la figure 2 :

E0 : initialisation du procédé : choix des paramètres de la loi de transfert,

E1 : initialisation d'un indice de boucle j = 0 et d'un indice courant X = X0,
E2 : répétition de N fois les étapes suivantes :

ET1 : lecture de l'octet $Oct_X$ de poids X de la donnée à transférer, situé à l'adresse $s_X$ de la mémoire morte ROM, et mémorisation de l'octet lu dans le registre RA de l'unité de commande UC,
ET2 : écriture, à l'adresse $d_X$ de la mémoire vive RAM, de l'octet contenu dans le registre RA,
ET3 : incrémentation de l'indice de boucle j (j = j+1) et variation de l'indice courant X en fonction de l'indice de boucle j.

La loi de transfert du procédé de l'invention définit l'ordre dans lequel les octets de la donnée secrète transitent sur le bus de données DBUS, cet ordre étant défini par les variations de l'indice courant X en fonction de l'indice de boucle j. L'indice courant X peut varier de différentes manières, l'essentiel étant que, au cours de la réalisation des N étapes E2, l'indice courant X prenne une et une seule fois l'ensemble des valeurs entières comprises entre 0 et N-1.

D'une manière générale, le procédé de l'invention propose de réaliser des permutations caractérisées par la loi de transfert suivante :

$$X = (X0 + SENS * PAS * j)\ modulo\ N,$$

X étant l'indice courant indiquant le poids de l'octet à transférer, j étant l'indice de boucle du procédé variant entre 0 et N-1, PAS, X0 et SENS étant trois paramètres de la loi de permutation. L'indice courant X est mémorisé dans le registre RX de l'unité de commande UC.

Le premier paramètre PAS, compris entre 0 et N-1, définit la différence, modulo N, entre les poids respectifs de deux octets transférés successivement. Par exemple, si les octets $Oct_0$ et $Oct_3$ de la donnée secrète, de poids respectifs 0 et 3, transitent successivement sur le bus DBUS, le pas de la permutation est PAS = 3 - 0 = 3.

Le second paramètre X0, compris entre 0 et N-1, définit le poids du premier octet transféré lors de la mise en oeuvre du procédé.

Le troisième paramètre SENS prend deux valeurs 1 ou -1, qui indiquent dans quelle direction le procédé parcourt l'ensemble des octets de la donnée à transférer.

Le choix des paramètres de la permutation est important. En effet, au cours de la réalisation de l'étape E2 du procédé, l'indice courant X doit prendre toutes les valeurs entières comprises entre 0 et N-1 lorsque que l'indice de boucle j varie de 0 à N-1.

Dans un premier mode de réalisation de l'invention, le paramètre PAS est choisi aléatoirement et les paramètres X0 et SENS sont constants, mémorisés dans la mémoire morte ROM du circuit programmable. Pour ce mode de réalisation et lors de l'étape d'initialisation du procédé E0, le générateur de nombres aléatoires GA fournit un nombre aléatoire à l'unité de commande UC, lorsqu'un signal de commande CO est reçu. Eventuellement, si le nombre aléatoire est supérieur à N-1, l'unité de commande UC le réduit modulo N pour obtenir un paramètre PAS compris entre 0 et N-1. Enfin, l'unité de commande UC va lire dans la mémoire morte les valeurs du point de départ X0 et du sens de la permutation SENS.

Par exemple, pour le transfert d'une donnée de N = 4 octets, si le générateur GA fournit un nombre PAS = 1 et si X0 = 2 et SENS = 1, la loi de transfert s'écrit "X = (2+j) modulo 4" et les octets de la données seront transférés dans l'ordre suivant : d'abord $Oct_2$, puis $Oct_3$, puis $Oct_0$ puis $Oct_1$.

Dans un autre exemple, si PAS = 3 (avec X0 = 2 et SENS = 1), la loi de transfert s'écrit "X = (2+3*j) modulo 4" et les octets de la donnée seront transférés dans l'ordre suivant : d'abord $Oct_2$, puis $Oct_1$, puis $Oct_0$, puis $Oct_3$.

Le paramètre PAS et le nombre N d'octets à transférer doivent être choisis premiers entre eux pour obtenir le transfert de tous les octets de la donnée. Pour cela, le nombre N est de préférence un nombre premier. Dans le cas contraire, il est possible de compléter les octets de poids forts de la donnée par des "0" afin d'obtenir un nombre N premier d'octets à transférer. Cependant, si le nombre N n'est pas premier, il est également possible d'utiliser une unité de commande comprenant des moyens pour vérifier que le nombre PAS fourni par le générateur GA et le nombre N sont premiers entre eux, et des moyens pour demander éventuellement un nouveau nombre aléatoire PAS au générateur GA.

Dans ce premier mode de réalisation du procédé de l'invention, le nombre PAS, choisi aléatoirement et éventuellement réduit modulo N si nécessaire, peut prendre au maximum N valeurs différentes 0 à N-1, l'ensemble des octets de la donnée secrète peut donc être transféré dans N ordres différents.

Dans un second mode de réalisation de l'invention, le point de départ X0 est choisi aléatoirement et les paramètres PAS et SENS sont constants, mémorisés dans la mémoire morte ROM du circuit programmable CP. Pour ce mode de réalisation et lors de l'étape d'initialisation du procédé E0, le générateur de nombres aléatoires GA fournit un nombre quelconque à l'unité de commande UC, lorsqu'un signal de commande CO est reçu. Eventuellement, si le nombre aléatoire fourni est supérieur à N-1, l'unité de commande UC le réduit modulo N pour obtenir un point de départ X0 compris entre 0 et N-1. Enfin, l'unité de commande UC va lire dans la mémoire morte ROM les valeurs des paramètres PAS et SENS.

Par exemple, pour le transfert d'une donnée de N = 4 octets, si le générateur GA fournit un point de départ X0 = 2 et si PAS = 1 et SENS = -1, la loi de transfert s'écrit "X = (2-j) modulo 4" et les octets de la données seront transférés dans l'ordre suivant : d'abord $Oct_2$, puis $Oct_1$, puis $Oct_0$ puis $Oct_3$. Dans un autre exemple, si X0 = 3 (avec PAS = 1 et SENS = -1), les octets de la donnée seront transférés dans l'ordre suivant : d'abord $Oct_3$, puis $Oct_2$, puis $Oct_1$ puis $Oct_0$.

Pour ce second mode de réalisation, le point de départ X0, choisi aléatoirement et éventuellement réduit modulo N si nécessaire, peut prendre au maximum N valeurs différentes comprises entre 0 et N-1. Ainsi, lors de chaque transfert de la donnée, l'ensemble des octets peut donc être transféré dans N ordres différents.

Dans un troisième mode de réalisation de l'invention, le sens de la permutation SENS est choisi aléatoirement et les paramètres PAS et X0 sont constants, mémorisés dans la mémoire morte ROM du circuit programmable CP. Pour ce mode de réalisation et lors de l'étape d'initialisation du procédé E0, le générateur de nombres aléatoires GA fournit un nombre aléatoire à l'unité de commande UC, lorsqu'un signal de commande CO est reçu. Eventuellement, si le nombre aléatoire fourni est supérieur à 1, l'unité de commande UC le réduit modulo 2 pour obtenir un nombre aléatoire égal à 0 ou 1. Puis, si le nombre aléatoire est égal à "0" alors l'unité de commande choisit SENS = -1 et inversement, si le nombre aléatoire est égal à 1, l'unité de commande choisit SENS = 1. Au cours de l'étape E0, l'unité de commande UC va ensuite lire dans la mémoire morte ROM les valeurs du paramètre PAS et du point de départ de la permutation X0.

Par exemple, pour le transfert d'une donnée de N = 4 octets, si le générateur GA fournit un sens de permutation SENS = 1 et si PAS = 1 et X0 = 0, les octets de la données seront transférés dans l'ordre suivant : d'abord $Oct_0$, puis $Oct_1$, puis $Oct_2$ puis $Oct_3$. Dans un autre exemple, si SENS = -1 (avec PAS = 1 et X0 = 0), les octets de la donnée seront transférés dans l'ordre suivant : d'abord $Oct_0$, puis $Oct_3$, puis $Oct_2$ puis $Oct_1$.

Pour ce troisième mode de réalisation, le nombre SENS, choisi aléatoirement et éventuellement réduit modulo 2 si nécessaire, peut prendre au maximum 2 valeurs différentes 0 et 1. Ce troisième mode de réalisation est donc moins performant dans la mesure où le nombre de combinaisons différentes de l'ensemble des octets de la donnée à transférer est limité à 2 : la donnée peut donc être assez facile à trouver.

Il est également possible de combiner les premier et/ou second et/ou troisième modes de réalisation de l'invention pour obtenir un procédé de transfert plus sûr. Par exemple, Dans un quatrième mode de réalisation de l'invention, les trois paramètres de la loi de permutation, PAS, X0 et SENS sont choisis aléatoirement.

Pour ce mode de réalisation et lors de l'étape d'initialisation du procédé E0, le générateur de nombres aléatoires GA fournit d'abord un premier nombre aléatoire à l'unité de commande UC, lorsqu'un premier signal de commande $CO_1$ est reçu. Eventuellement, si le premier nombre aléatoire est supérieur à N-1, l'unité de commande UC le réduit modulo N pour obtenir un paramètre PAS compris entre 0 et N-1.

Le générateur GA fournit ensuite un second nombre aléatoire à l'unité de commande, lorsqu'un second signal de commande $CO_2$ est reçu. Eventuellement, si le second nombre aléatoire est supérieur à N-1, l'unité de commande UC le réduit modulo N pour obtenir un point de départ X0 compris entre 0 et N-1.

Puis, lorsqu'un troisième signal de commande $CO_3$ est reçu, le générateur GA fournit un troisième nombre aléatoire qui est éventuellement réduit modulo 2 par l'unité de commande s'il est supérieur à 1. Enfin, l'unité de commande choisit SENS = -1 si le troisième nombre aléatoire est égal à 0, et SENS = 1 si le troisième nombre aléatoire est égal à 1. Bien sûr, l'ordre de réception des signaux $CO_1$, $CO_2$ et $CO_3$ est sans importance.

Ce quatrième mode de réalisation est particulièrement intéressant. En effet, puisque tous les paramètres de la permutation PAS, X0 et SENS sont choisis aléatoirement, il existe p*N*2 combinaisons possibles des octets d'une même donnée, p étant le nombre de valeurs possibles pour le paramètre PAS sachant que PAS et N doivent être premiers entre eux. Si de plus, le nombre N est premier, il existe un nombre maximal 2*N*N de combinaisons possibles des octets d'une même donnée, il est donc plus difficile de trouver la bonne valeur de la donnée transférée.

Bien sûr, toute autre combinaison des premier, second et troisième modes de réalisation de l'invention est possible. Par exemple, il est possible de choisir aléatoirement le paramètre PAS et le point de départ X0 et de fixer la valeur de SENS à 1 ou -1.

Un avantage de l'invention est de rendre inopérante la technique d'espionnage d'analyse de courant. En effet, si K mesures de courant sont effectuées lors de K transferts de la même donnée sur le bus DBUS et si une moyenne de ces K mesures est effectuée pour éliminer le bruit de la mesure, le résultat obtenu sera une donnée ayant 8*N bits identiques égaux à la valeur moyenne des 8*N bits de la donnée réelle.

Un autre avantage de l'invention est de proposer un procédé de transfert de données qui peut être utilisé en parallèle avec d'autres procédés de protection de données, sans perturber le fonctionnement de ces derniers. Par exemple, dans la description ci-dessus, les adresses $S_0$ à $S_{N-1}$ et $d_0$ à $d_{N-1}$ ont été supposées consécutives. Néanmoins, il serait tout-à-fait possible de transférer des données dont les octets sont éparpillés dans la mémoire ROM.

**Revendications**

1. Procédé de transfert sécurisé de données dans un circuit programmable (CP) comprenant une unité de commande (UC), une mémoire morte (ROM) comprenant des données à transférer, une mémoire inscriptible (RAM) et un bus de données (DBUS) connecté entre la mémoire morte (ROM) et la mémoire inscriptible (RAM), le bus de données (DBUS) étant commandé par l'unité de commande (UC),
   le procédé de transfert étant **caractérisé en ce qu'**une donnée secrète à transférer de N octets transite octet par octet sur le bus de données (DBUS), chaque octet transitant une seule fois sur le bus de données,
   et **en ce que** les octets sont transférés selon une loi de transfert ayant au moins un paramètre choisi de manière aléatoire par l'unité de commande (UC) avant chaque transfert de la donnée secrète.

2. Procédé selon la revendication 1, **caractérisé en ce que** la loi de transfert est une permutation des éléments de l'ensemble des N octets de la donnée secrète à transférer.

3. Procédé selon la revendication 2, **caractérisé en ce que** la permutation est définie par la relation

$$X = (X0 + SENS * PAS * j) \; modulo \; N,$$

   où un premier paramètre (PAS), compris entre 0 et N-1, définit le pas de la permutation,
   où un second paramètre (SENS), prenant deux valeurs 1 ou -1, définit le sens de parcours de l'ensemble des N octets de la donnée secrète,
   où un troisième paramètre (X0), compris entre 0 et N-1, définit le point de départ de la permutation,
   et où un indice courant (X), obtenu à partir des premier à troisième paramètres (PAS, SENS, X0) et d'un indice de boucle (j) variant entre 0 et N-1, indique le poids d'un octet de la donnée secrète à transférer.

4. Procédé selon la revendication 3, **caractérisé en ce que** le premier paramètre (PAS) est choisi aléatoirement par l'unité de commande (UC), avant chaque transfert de la donnée secrète.

5. Procédé selon l'une des revendications 3 ou 4, **caractérisé en ce que** le second paramètre (SENS) est choisi aléatoirement par l'unité de commande (UC), avant chaque transfert de la donnée secrète.

6. Procédé selon l'une des revendications 3 à 5, **caractérisé en ce que** le troisième paramètre (X0) est choisi aléatoirement par l'unité de commande (UC), avant chaque transfert de la donnée secrète.

7. Procédé selon l'une des revendications 3 à 6, **caractérisé en ce que** le premier paramètre (PAS) et le troisième paramètre (X0) sont choisis aléatoirement par l'unité de commande (UC), avant chaque transfert de la donnée secrète.

8. Procédé selon l'une des revendications 3 à 7, **caractérisé en ce que** le premier paramètre (PAS) de la permutation et le nombre N sont premiers entre eux.

9. Procédé selon l'une des revendications 3 à 8, **caractérisé en ce que** le nombre N est un nombre entier premier et **en ce que** le premier paramètre (PAS) de la permutation est un nombre entier compris entre 1 et N-1.

10. Procédé selon l'une des revendications 3 à 9, **caractérisé en ce qu'**il comprend les étapes suivantes :

   E0: Initialisation du procédé et choix des premier à troisième paramètres (PAS, SENS, X0), l'un au moins des premier à troisième paramètres étant choisi aléatoirement par l'unité de commande (UC), les premier à troisième paramètres (PAS, SENS, X0) étant mémorisés dans un premier registre (RX) de l'unité de commande (UC),
   E1 : Initialisation d'un indice de boucle (j) et d'un indice courant (X),
   E2 : Répétition N fois des étapes suivantes :

   ET1 : lecture, dans la mémoire morte (ROM) d'un octet de la donnée à transférer, le poids de l'octet lu étant égal à l'indice courant (X), et mémorisation de l'octet lu dans un second registre (RA) de l'unité de commande,
   ET2 : écriture dans la mémoire vive (RAM), de l'octet contenu dans le second registre (RA),

ET3 : incrémentation de l'indice de boucle (j) et variation de l'indice courant (X).

11. Circuit programmable (CP) comprenant une unité de commande (UC), une mémoire morte (ROM) comprenant des données à transférer, une mémoire inscriptible (RAM) et un bus de données (DBUS) connecté entre la mémoire morte (ROM) et la mémoire inscriptible (RAM), le bus de données (DBUS) étant commandé par l'unité de commande (UC),

le circuit programmable (CP) étant **caractérisé en ce qu'**il comporte en outre un générateur de nombres aléatoires (GA) pour fournir au moins un paramètre d'une loi de transfert de données utilisée pour transférer une donnée secrète de N octets de la mémoire morte (ROM) vers la mémoire vive (RAM), les octets de la donnée secrète à transférer transitant octet par octet sur le bus de données (DBUS), chaque octet transitant une seule fois sur le bus de données (DBUS), l'au moins un paramètre étant différent à chaque transfert de la donnée secrète.

**Claims**

1. Method of secure data transfer in a programmable circuit (CP) comprising a control unit (UC), a read-only memory (ROM) comprising data to be transferred, a writable memory (RAM) and a data bus (DBUS) connected between the read-only memory (ROM) and the writable memory (RAM), the data bus (DBUS) being controlled by the control unit (UC),

the transfer method being **characterised in that** a secret N-byte data item to be transferred passes byte by byte over the data bus (DBUS), each byte passing only once over the data bus,

and **in that** the bytes are transferred according to a transfer law having at least one parameter chosen randomly by the control unit (UC) before each transfer of the secret data item.

2. Method according to claim 1, **characterised in that** the transfer law is a permutation of the elements of all the N bytes of the secret data item to be transferred.

3. Method according to claim 2, **characterised in that** the permutation is defined by the equation

$$X = (X0 + DIRECTION * STEP * j) \bmod N,$$

where a first parameter (STEP), between 0 and N-1, defines the permutation step,

where a second parameter (DIRECTION), taking two values 1 or -1, defines the direction of travel of all the N bytes of the secret data item,

where a third parameter (X0), between 0 and N-1, defines the starting point of the permutation,

and where a current index (X), obtained from the first to third parameters (STEP, DIRECTION, X0) and a loop index (j) varying between 0 and N-1, indicates the weight of a byte of the secret data item to be transferred.

4. Method according to claim 3, **characterised in that** the first parameter (STEP) is chosen randomly by the control unit (UC), before each transfer of the secret data item.

5. Method according to one of claims 3 or 4, **characterised in that** the second parameter (DIRECTION) is chosen randomly by the control unit (UC), before each transfer of the secret data item.

6. Method according one of claims 3 to 5, **characterised in that** the third parameter (X0) is chosen randomly by the control unit (UC) before each transfer of the secret data item.

7. Method according to one of claims 3 to 6, **characterised in that** the first parameter (STEP) and the third parameter (X0) are chosen randomly by the control unit (UC) before each transfer of the secret data item.

8. Method according to one of claims 3 to 7, **characterised in that** the first parameter (STEP) of the permutation and the number N are prime with each other.

9. Method according to one of claims 3 to 8, **characterised in that** the number N is a prime integer number and **in that** the first parameter (STEP) of the permutation is an integer number between 1 and N-1.

**10.** Method according to one of claims 3 to 9, **characterised in that** it comprises the following steps:

E0: Initialising the method and choosing the first to third parameters (STEP, DIRECTION, X0), at least one of the first to third parameters being chosen randomly by the control unit (UC), the first to third parameters (STEP, DIRECTION, X0) being stored in a first register (RX) of the control unit (UC),
E1: Initialising a loop index (j) and a current index (X),
E2: Repeating the following steps N times:

ET1: reading, in the read-only memory (ROM), a byte of the data item to be transferred, the weight of the byte read being equal to the current index (X), and storing the byte read in a second register (RA) of the control unit,
ET2: writing in the random access memory (RAM) the byte contained in the second register (RA),
ET3: incrementing the loop index (j) and varying the current index (X).

**11.** Programmable circuit (CP) comprising a control unit (UC), a read-only memory (ROM) comprising data to be transferred, a writable memory (RAM) and a data bus (DBUS) connected between the read-only memory (ROM) and the writable memory (RAM), the data bus (DBUS) being controlled by the control unit (UC),
the programmable circuit (CP) being **characterised in that** it also comprises a random number generator (GA) for supplying at least one parameter of a data transfer law used for transferring an N-byte secret data item from the read-only memory (ROM) to the random access memory (RAM), the bytes of the secret data item to be transferred passing byte by byte over the data bus (DBUS), each byte passing only once over the data bus (DBUS), the at least one parameter being different at each transfer of the secret data item.

**Patentansprüche**

**1.** Verfahren zur gesicherten Datenübertragung in einer programmierbaren Schaltung (CP) mit einer Steuereinheit (UC), einem Festspeicher (ROM) mit zu übertragenden Daten, einem beschreibbaren Speicher (RAM) und einem zwischen dem Festspeicher (ROM) und dem beschreibbaren Speicher (RAM) angeschlossenen Datenbus (DBUS), wobei der Datenbus (DBUS) von der Steuereinheit (UC) gesteuert ist,
wobei das Übertragungsverfahren **dadurch gekennzeichnet ist, dass** zu übertragende geheime Daten mit N Bytes Byte für Byte auf den Datenbus (DBUS) übertragen werden, wobei jedes Byte ein einziges Mal auf den Datenbus läuft, und dass die Bytes gemäß einem Übertragungsgesetz übertragen werden, welches zumindest einen Parameter aufweist, der zufällig von der Steuereinheit (UC) vor jeder Übertragung der geheimen Daten ausgewählt ist

**2.** Verfahren gemäß Anspruch 1, **dadurch gekennzeichnet, dass** das Übertragungsgesetz eine Permutation der Elemente der Gesamtheit von N Bytes der zu übertragenden Geheimdaten ist.

**3.** Verfahren gemäß Anspruch 2, **dadurch gekennzeichnet, dass** die Permutation durch das Verhältnis

$$X = (X0 + SENS * PAS * j) \text{ modulo } N$$

definiert ist,
wobei ein erster Parameter (PAS), der zwischen 0 und N-1 liegt, den Schritt der Permutation definiert,
wobei ein zweiter Parameter (SENS), der zwei Werte 1 oder -1 annimmt, die Durchlaufrichtung der Gesamtheit der N Bytes der geheimen Daten definiert,
wobei ein dritter Parameter (X0), der zwischen 0 und N-1 liegt, den Ausgangspunkt der Permutation definiert,
und wobei eine laufende Zahl (X), die anhand des ersten bis dritten Parameters und einer Zykluszahl (j) erhalten wird, die zwischen 0 und N-1 variiert, das Gewicht eines Bytes der zu übertragenden geheimen Daten anzeigt.

**4.** Verfahren gemäß Anspruch 3, **dadurch gekennzeichnet, dass** der erste Parameter (PAS) von der Steuereinheit (UC) vor jeder Übertragung der geheimen Daten zufällig gewählt wird.

**5.** Verfahren gemäß einem der Ansprüche 3 oder 4, **dadurch gekennzeichnet, dass** der zweite Parameter (SENS) von der Steuereinheit (UC) vor jeder Übertragung der geheimen Daten zufällig gewählt wird.

**6.** Verfahren gemäß einem der Ansprüche 3 bis 5, **dadurch gekennzeichnet, dass** der dritte Parameter (X0) von der Steuereinheit (UC) vor jeder Übertragung der geheimen Daten zufällig gewählt wird.

**7.** Verfahren gemäß einem der Ansprüche 3 bis 6, **dadurch gekennzeichnet, dass** der erste Parameter (PAS) und der dritte Parameter (X0) von der Steuereinheit (UC) vor jeder Übertragung der geheimen Daten zufällig gewählt werden.

**8.** Verfahren gemäß einem der Ansprüche 3 bis 7, **dadurch gekennzeichnet, dass** der erste Parameter (PAS) der Permutation und die Zahl N keinen gemeinsamen Teiler miteinander aufweisen.

**9.** Verfahren gemäß einem der Ansprüche 3 bis 8, **dadurch gekennzeichnet, dass** die Zahl N eine ganze Primzahl ist, und dass der erste Parameter (PAS) der Permutation eine Ganzzahl zwischen 1 und N-1 ist.

**10.** Verfahren gemäß einem der Ansprüche 3 bis 9, **dadurch gekennzeichnet, dass** es die folgenden Schritte aufweist:

E0: Initialisierung des Verfahrens und Wahl des ersten bis dritten Parameters (PAS, SENS, X0), wobei zumindest einer des ersten bis dritten Parameters zufällig von der Steuereinheit (UC) gewählt wird, wobei der erste bis dritte Parameter (PAS, SENS, X0) in einem ersten Register (RX) der Steuereinheit (UC) gespeichert werden,
E1: Initialisierung einer Zykluszahl (j) und einer laufenden Zahl (X),
E2: N-malige Wiederholung der nachfolgenden Schritte:

ET1: Auslesen eines Bytes der zu übertragenden Daten aus dem Festspeicher (ROM), wobei das Gewicht des ausgelesenen Bytes gleich der laufenden Zahl (X) ist, und Speichern des ausgelesenen Bytes in einem zweiten Register (RA) der Steuereinheit,
ET2: Schreiben des in dem zweiten Register (RA) enthaltenen Bytes in den Lebendspeicher (RAM),
ET3: Inkrementieren der Zykluszahl (j) und Veränderung der laufenden Zahl (X).

**11.** Programmierbare Schaltung (CP) mit einer Steuereinheit (UC), einem Festspeicher (ROM) mit zu übertragenden Daten, einem beschreibbaren Speicher (RAM) und einem zwischen dem Festspeicher (ROM) und dem beschreibbaren Speicher (RAM) angeschlossenen Datenbus (DBUS), wobei der Datenbus (DBUS) von der Steuereinheit (UC) gesteuert ist,
wobei die programmierbare Schaltung (CP) **dadurch gekennzeichnet ist, dass** sie außerdem einen Zufallszahlengenerator (GA) aufweist, um zumindest einen Parameter eines Datenübertragungsgesetzes zu liefern, welches eingesetzt wird, um geheime Daten mit N Bytes von dem Festspeicher (ROM) in den Lebendspeicher (RAM) zu übertragen, wobei die Bytes der zu übertragenden geheimen Daten Byte für Byte auf den Datenbus (DBUS) übertragen werden, wobei jedes Byte ein einziges Mal auf den Datenbus (DBUS) läuft, wobei zumindest ein Parameter bei jeder Übertragung der geheimen Daten unterschiedlich ist.

| $s_0$ | $s_1$ | | $s_{N-1}$ |
|---|---|---|---|

ROM1

| $d_0$ | $d_1$ | | | $d_{N-1}$ |
|---|---|---|---|---|

RAM

CP

DBUS

GA

Générateur
de nombres
aléatoires

CO

Unité de commande

UC

RA

RX

Fig. 1

E0

Initialisation du procédé

E1

Initialisation d'un indice de boucle : j = 0
Initialisation d'un indice courant : X = X0

Répéter N fois

$A <= s_X$

ET1

$d_X <= A$

ET2

E2

Variation de j : j = j+1
Variation de X <= A

ET3

Fig. 2